# EUROPEAN PATENT SPECIFICATION

(11) **EP 4 559 169 B1**
(45) Date of publication and mention of the grant of the patent: **30.09.2026**
(21) Application number: 23852890.5
(22) Date of filing: 04.08.2023
(51) Int. Cl.: H04L 65/1016, H04L 65/1069, H04L 65/1104, H04L 65/80, H04L 65/40

(54) **METHOD AND APPARATUS OF AI MODEL DESCRIPTIONS FOR MEDIA SERVICES**
VERFAHREN UND VORRICHTUNG FÜR KI-MODELLBESCHREIBUNGEN FÜR MEDIENDIENSTE
PROCÉDÉ ET APPAREIL DE DESCRIPTIONS DE MODÈLES D'IA POUR DES SERVICES MULTIMÉDIAS

(30) Priority: 10.08.2022 KR 20220100029
(43) Date of publication of application: 28.05.2025
(73) Proprietor: Samsung Electronics Co., Ltd., Suwon-si, Gyeonggi-do 16677 (KR)
(72) Inventor: YIP, Eric, Suwon-si, Gyeonggi-do 16677 (KR); YANG, Hyunkoo, Suwon-si, Gyeonggi-do 16677 (KR)
(74) Representative: Gulde & Partner
(86) International application number: PCT/KR2023/011477
(87) International publication number: WO 2024/035010

(56) References cited:
- US-A1- 2007 213 078
- US-A1- 2018 077 001
- US-A1- 2018 077 001
- US-A1- 2019 102 700
- US-A1- 2020 242 508
- US-A1- 2022 095 131
- IGOR D D CURCIO (NOKIA): "5G Activities relevant to MPEG", no. m59860 ; n21544, 29 April 2022 (2022-04-29), XP030331220, Retrieved from the Internet <URL:https://dms.mpeg.expert/doc_end_user/documents/138_OnLine/wg11/m59860-v2-wg2n00189.zip wg2n00189 5G Activities relevant for MPEG.docx> [retrieved on 20220429]
- "3rd Generation Partnership Project; Technical Specification Group Services and System Aspects; Study on traffic characteristics and performance requirements for AI/ML model transfer in 5GS (Release 18)", no. V18.0.0, 24 June 2021 (2021-06-24), pages 1 - 111, XP052029571, Retrieved from the Internet <URL:https://ftp.3gpp.org/Specs/archive/22_series/22.874/22874-i00.zip 22874-i00.doc> [retrieved on 20210624]

## Description

### Technical Field

The disclosure relates to a method and apparatus of AI model descriptions for media services. More particularly, the disclosure relates to a 5G network systems for multimedia, architectures and procedures for AI/ML model transfer and delivery over 5G.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/ protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

The disclosure relates to a 5G network systems for multimedia, architectures and procedures for AI/ML model transfer and delivery over 5G, AI/ML model transfer and delivery over 5G for AI enhanced multimedia services, AI/ML model selection and transfer over IP multimedia subsystem (IMS), AI/ML enhanced conversational services over IMS, SDP signalling for AI/ML model delivery, and AI multimedia.

AI is a general concept defining the capability for a system to act based on 2 major conditions:
- The context in which a task has to be done, meaning the value or state of different input parameters.
- The past experience of achieving the same task with different parameter values and the record of potential success with each parameter value.

ML is often described as a subset of AI, in which an application has the capacity to learn from the past experience. This learning feature usually starts with an initial training phase so as to ensure a minimum level of performance when ML is placed into service.

Recently, AI/ML has been introduced and generalized in media related applications, ranging from legacy applications such as image classification, speech/face recognition, to more recent ones such as video quality enhancement. Additionally, AI applications for AR/VR has become ever more popular, especially in applications regarding the enhancement of photo-realistic avatars related to facial 3D modelling or similar applications. As research into this field matures, more and more complex AI/ML-based applications requiring higher computational processing can be expected; such processing involves dealing with significant amounts of data not only for the inputs and outputs into the AI/ML models, but also for the increasing data size and complexity of the AI/ML models themselves. This growing amount of AI/ML related data, together with a need for supporting processing intensive mobile applications (such as VR, AR/MR, gaming, and more), highlights the importance of handling certain aspects of AI/ML processing by the server over 5G system, in order to meet the required latency requirements of various applications.

Document D1 (IGOR D.D. CURCIO (NOKIA): "5G Activities relevant to MPEG", MPEG Meeting 138, April 2022, XP030331220) relates to 3GPP activities concerning 5G media services. D1 discusses the distribution and transfer of artificial intelligence (AI) and machine learning (ML) models over 5G networks for media-related applications, such as video processing and image recognition. It further addresses split AI/ML processing scenarios in which AI inference operations may be divided between network-side entities (e.g. edge or cloud components) and user equipment (UE). D1 also refers to IP Multimedia Subsystem (IMS)-based conversational services and RTP-based media transport, which rely on session establishment procedures using the Session Description Protocol (SDP). However, D1 does not describe negotiating AI model characteristics, such as partial AI model information, via specific SDP attributes during session establishment.

The above information is presented as background information only to assist with an understanding of the disclosure. No determination has been made, and no assertion is made, as to whether any of the above might be applicable as prior art with regard to the disclosure.

### Disclosure of Invention

### Technical Problem

Current implementations of AI/ML are mainly proprietary solutions, enabled via applications without compatibility with other market solutions. In order to support AI/ ML for multimedia applications over 5G, AI/ML models should support compatibility between UE devices and application providers from different mobile network operators (MNOs). Not only this, but AI/ML model delivery for AI/ML media services should support media context, UE status, and network status based selection and delivery of the AI/ML model. The processing power of UE devices is also a limitation for AI/ML media services, since next generation media services, such as AR, are typically consumed on lightweight, low processing power devices, such as AR glasses, for which long battery life is also a major design hurdle/limitation. Another limitation of current technology is a suitable method to configure the sending of AI/ML models and its associated data via IMS between two supporting clients (either two UEs or between a UE and a Multimedia Resource Function (MRF)).

An exemplary method and apparatus for delivering AI/ML models via IMS, enabling the selection of suitable AI inference configurations and corresponding AI/ML models, and delivering intermediate AI/ML data via IMS when performing partial inferencing (or partial AI inferencing, or split inferencing, or split AI inferencing) between two clients are provided in this disclosure.

### Solution to Problem

This disclosure introduces the delivery of AI/ML models and associated data for conversational video and audio. By defining new parameters for SDP signalling, a receiver may request only the required AI/ML models which are required for conversational service at hand. Additionally, depending on the AI/ML model(s) selected, split inferencing may also be configured between the sending client (e.g., MRF) and the receiving client (e.g., UE), enabling partial, split AI inferencing between the two clients. Since offer and/or request is negotiated between the sender and the receiver, suitable AI inference configurations and corresponding AI/ML models can be selected and delivered between the clients according to the service requirements and client capabilities.

In accordance with an embodiment of the disclosure, a method of a multimedia resource function (MRF) for transmitting artificial intelligence (AI) model data via an IP multimedia subsystem (IMS) is provided. The method comprises transmitting to a user equipment (UE) a session description protocol (SDP) offer message comprising a first attribute indicating at least one AI model; receiving from the UE a SDP answer message comprising the first attribute; and transmitting to the UE AI model data based on the first attribute, wherein the first attribute comprises at least a set of parameters corresponding to the at least one AI model, and wherein the set of parameters comprises a first parameter indicating whether the at least one AI model is a partial AI model or not.

In accordance with an embodiment of the disclosure, a method of user equipment (UE) for receiving artificial intelligence (AI) model data via an IP multimedia subsystem (IMS) is provided. The method comprises receiving from a multimedia resource function (MRF) a session description protocol (SDP) offer message comprising a first attribute indicating at least one AI model; transmitting to the MRF a SDP answer message comprising the first attribute; and receiving from the MRF AI model data based on the first attribute, wherein the first attribute comprises at least a set of parameters corresponding to the at least one AI model, and wherein the set of parameters comprises a first parameter indicating whether the at least one AI model is a partial AI model or not.

In accordance with an embodiment of the disclosure, a multimedia resource function (MRF) apparatus for transmitting artificial intelligence (AI) model data via an IP multimedia subsystem (IMS) is provided. The apparatus comprises a transceiver; and a processor configured to control the transceiver to: transmit to a user equipment (UE) a session description protocol (SDP) offer message comprising a first attribute indicating at least one AI model; receive from the UE a SDP answer message comprising the first attribute; and transmit to the UE AI model data based on the first attribute, wherein the first attribute comprises at least a set of parameters corresponding to the at least one AI model, and wherein the set of parameters comprises a first parameter indicating whether the at least one AI model is a partial AI model or not.

In accordance with an embodiment of the disclosure, a user equipment (UE) apparatus for receiving artificial intelligence (AI) model data via an IP multimedia subsystem (IMS) is provided. The apparatus comprises a transceiver; and a processor configured to control the transceiver to: receive from a multimedia resource function (MRF) a session description protocol (SDP) offer message comprising a first attribute indicating at least one AI model; transmit to the MRF a SDP answer message comprising the first attribute; and receive from the MRF AI model data based on the first attribute, wherein the first attribute comprises at least a set of parameters corresponding to the at least one AI model, and wherein the set of parameters comprises a first parameter indicating whether the at least one AI model is a partial AI model or not.

Other aspects, advantages, and salient features of the disclosure will become apparent to those skilled in the art from the following detailed description, which, taken in conjunction with the annexed drawings, discloses various embodiments of the disclosure.

### Advantageous Effects of Invention

UE capability, service requirement driven AI/ML model selection, delivery and inference between network (MRF) and UE for conversational multimedia telephony services using IMS (MTSI) are enabled by this disclosure.

### Brief Description of Drawings

The above and other aspects, features, and advantages of certain embodiments of the disclosure will be more apparent from the following description taken in conjunction with the accompanying drawings, in which:
Fig. 1 shows an exemplary structure of a 3G network consisting of a User Equipment (UE), a base station (NodeB), a Radio Network Controller (RNC), and a Mobile Switching Center (MSC).
Fig. 2 shows an exemplary structure of a long term evolution (LTE) network.
Fig. 3 shows an exemplary structure of a voice and video codec of a voice over LTE (VoLTE) supported terminal and a Realtime Transport Protocol (RTP) / user datagram protocol (UDP) / IP protocol.
Fig. 4 shows an exemplary situation in which media from, and to a mobile phone UE is transmitted using a 5G network.
Fig. 5 shows an exemplary procedure for a transmitting terminal (UE A) and a receiving terminal (UE B) to negotiate a transmission method of a conversational service using an IP multimedia subsystem (IMS).
Fig. 6 shows an exemplary procedure of a receiving terminal for establishing an SDP answer from an SDP offer transmitted by a transmitting terminal.
Fig. 7 shows an exemplary basic user plane flow for an AI based conversational service between two UEs, with an MRF in between.
Fig. 8 shows an exemplary service architecture for split AI inferencing between a UE and network (e.g. MRF).
Fig. 9 shows an exemplary structure of a 5G AI media client terminal supporting voice and video codecs as well as AI model and intermediate data related media processing functionalities, and an RTP / UDP / IP protocol, as well as data channel respectively.
Fig. 10 is a block diagram illustrating a structure of a satellite according to an embodiment of the disclosure.
Fig. 11 shows a method of a MRF for transmitting AI model data via an IMS according to an embodiment of the disclosure.
Fig. 12 shows a method of a UE for receiving AI model data via an IMS according to an embodiment of the disclosure.

### Mode for the Invention

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component" includes reference to one or more of such components.

The disclosure may relate to multimedia content processing authoring, pre-processing, post-processing, metadata delivery, delivery, decoding and rendering of, virtual reality, mixed reality and augmented reality contents, including two dimensional (2D) video, 360 video, three dimensional (3D) media represented by point clouds and meshes. The disclosure may also relate to virtual reality (VR) devices, eXtended Reality (XR) devices, session description protocol (SDP) negotiation. The disclosure may also relate to support of immersive teleconferencing and telepresence for remote terminals. The disclosure may also relate to conversational 360 video VR capture, processing, rendering, fetching, delivery, rendering.

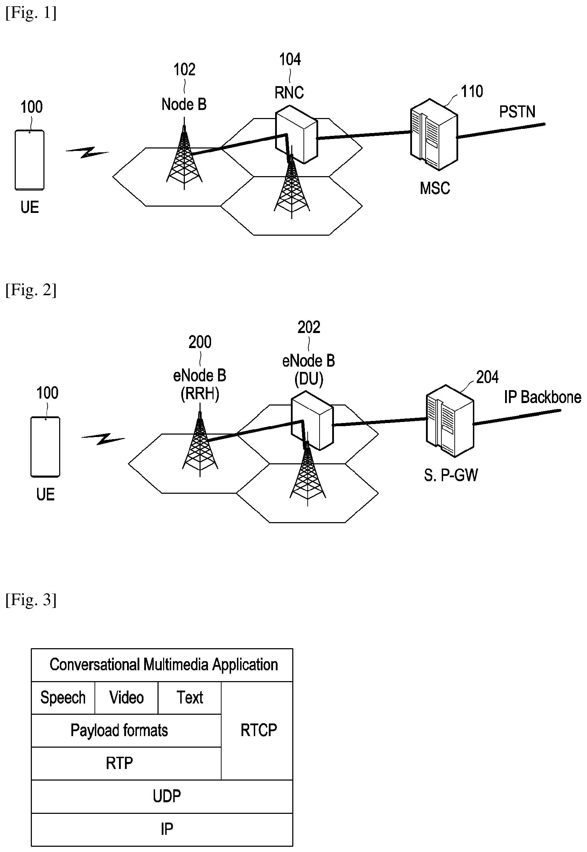

Figure 1 shows an exemplary structure of a 3G network consisting of a User Equipment (UE), a base station (NodeB), a Radio Network Controller (RNC), and a Mobile Switching Center (MSC).

The network is connected to another mobile communication network and a public switched telephone network (PSTN). In such a 3G network, voice is compressed / restored with an Adaptive Multi-Rate (AMR) codec, and the AMR codec is installed in a terminal (100) and MSC (110) to provide a two-way call service. The MSC (110) converts the voice compressed in the AMR codec into a pulse code modulation (PCM) format and transmits the voice to the PSTN, or vice versa, transmits the voice in the PCM format from the PSTN, compresses the voice into the AMR codec, and transmits the voice to the base station (102). The RNC (104) can control the call bit rate of the voice codec installed in the UE (100) and MSC (110) in real time using a Codec Mode Control (CMC) message.

Figure 2 shows an exemplary structure of a long term evolution (LTE) network.

As a packet-switched network is introduced in 4G, a voice codec is installed only in a terminal (100), and a voice frame compressed at intervals of 20 ms is not restored at a base station (200, 202) or the network node (204) located in the middle of the transmission path and is transmitted to a counterpart terminal.

The voice codec is installed only in the UE (100), and each terminal can adjust the voice bit rate of the counterpart terminal using a Codec Mode Request (CMR) message. In Fig. 2, the eNodeB, which is a base station, is divided into a Remote Radio Head (RRH) (200) dedicated to radio frequency (RF) functions and a Digital Unit (DU) (202) dedicated to modem digital signal processing. The eNodeB is connected to the Internet protocol (IP) backbone network through the Serving Gateway (S-GW) and Packet Data Network Gateway (P-GW) (204). The IP backbone network is connected to the mobile communication network or Internet of other service providers.

Figure 3 shows an exemplary structure of a voice and video codec of a voice over LTE (VoLTE) supported terminal and a Realtime Transport Protocol (RTP) / user datagram protocol (UDP) / IP protocol.

The IP protocol located at the bottom of this structure is connected to the Packet Data Convergence Protocol (PDCP) located at the top of the protocol structure. The RTP / UDP / IP header is attached to the compressed media frame in the voice and video codec and transmitted to the counterpart terminal through the LTE network. In addition, the counterpart terminal receives the media packet compressed and transmitted from the network, restores the media, listens to the speaker and the display, and views the media. At this time, even if the compressed voice and video packet do not arrive at the same time, the Timestamp information of the RTP protocol header is used to synchronize the two media to listen and watch.

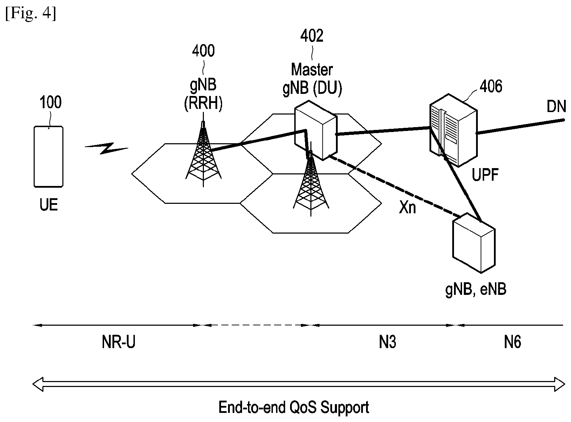

Fig. 4 shows an exemplary situation in which media from, and to a mobile phone UE is transmitted using a 5G network.

The 5G nodes corresponding to the eNodeB, S-GW, and P-GW of LTE are gNB (400, 402), User Plane Function (UPF) (406), and Data Network (DN). In this case, conversational media, including video and audio, can be transmitted using the 5G network. Related to this disclosure, additionally data related AI model (model data as well as related intermediate data etc) can also be transmitted using the 5G network.

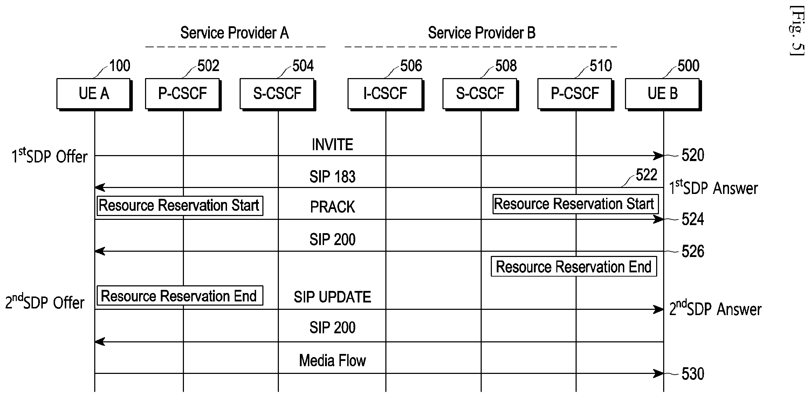

FIG. 5 shows an exemplary procedure for a transmitting terminal (UE A) and a receiving terminal (UE B) to negotiate a transmission method of a conversational service using an IP multimedia subsystem (IMS).

The IMS may be shown in FIG. 4. Fig. 5 may show an exemplary procedure for a UE A and a UE B to secure the quality of service (QoS) of a wired and wireless transmission path. The transmitting terminal (100) transmits the Session Description Protocol (SDP) request message (e.g., SDP Offer) to the Proxy Call Session Control Function (P-CSCF) (502), which has an IMS node allocated to the transmitting terminal (100), in the Session Initiation Protocol (SIP) Invite message (520). This message (520) is transmitted to the IMS connected to a counterpart terminal (500) through nodes such as Session Call Session Control Function (S-CSCF) (504) of one service provider, Interrogating Call Session Control Function (I-CSCF) (506), S-CSCF (508) and P-CSCF (510) of another service provider, and finally to the receiving terminal (500).

The receiving terminal (500) may select an acceptable bit rate and a transmission method from among the bit rates proposed by the transmitting terminal (100). For an AI based conversational service, the receiving terminal (500) may also select a desired configuration of AI inferencing (together with required AI models and possible intermediate data) according to that offered by the sending terminal (100), including these information in an SDP answer message in the SIP 183 message (522) in order to transmit the SDP answer message to the transmitting terminal (100). In this case, the sending terminal may be a Multimedia Resource Function (MRF) instead of a UE device. The MRF may be a network entity and may exist between the sending terminal (100) and the receiving terminal (500) in the IMS. The MRF may intermediate the sending terminal (100) and the receiving terminal (500).

In the process of transmitting this message (522) to the transmitting terminal (100), each IMS node starts to reserve transmission resources of the wired and/or wireless networks required for this service, and all the conditions of the session are agreed through additional procedures (524, 526). A transmitting terminal that confirms that transmission resources of all transmission sections may be secured and may transmit media flow (530) (e.g., image videos) to the receiving terminal (500).

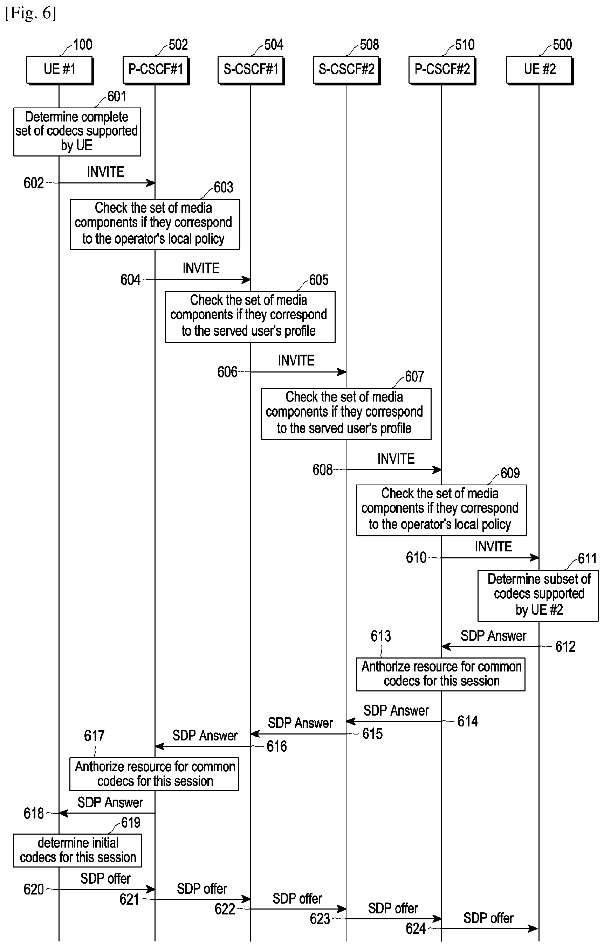

Fig. 6 shows an exemplary procedure of a receiving terminal for establishing an SDP answer from an SDP offer transmitted by a transmitting terminal.

An exemplary detailed procedure is as follows:

At 601, UE#1 (100) may insert a codec(s) to a SDP payload. The inserted codec(s) may reflect the UE#1's terminal capabilities and/or user preferences for the session capable of supporting for this session. UE#1 (100) may build a SDP containing media parameters (e.g., bandwidth requirements and/or characteristics of each), and may assign local port numbers for each possible media flow. Multiple media flows may be offered, and for each media flow (e.g., "m= " line in SDP), there may be multiple codec choices offered.

At 602, UE#1 (100) may send an initial INVITE message to P-CSCF#1 (502) containing this SDP.

At 603, P-CSCF#1 (502) may examine the media parameters. If P-CSCF#1 (502) finds media parameters not allowed to be used within an IMS session (based on P-CSCF local policies, or if available bandwidth authorization limitation information coming from the Policy and Charging Rules Function (PCRF)/ Policy Control Function (PCF)), P-CSCF#1 (502) may reject the session initiation attempt. This rejection may contain sufficient information for the originating UE (100) to re-attempt session initiation with media parameters that are allowed by local policy of P-CSCF#1's network. (e.g., according to the procedures specified in Internet Engineering Task Force (IETF) RFC 3261). In this flow described in Figure 6 the P-CSCF#1 (502) may allow the initial session initiation attempt to continue.

NOTE 1: Whether the P-CSCF should interact with PCRF/PCF in this step is based on operator policy.

At 604, P-CSCF#1 (502) may forward the INVITE message to S-CSCF#1 (504).

At 605, S-CSCF#1 (504) may examine the media parameters. If S-CSCF#1 (504) finds media parameters that local policy or the originating user's subscriber profile does not allow to be used within an IMS session, S-CSCF#1 (504) may reject the session initiation attempt. This rejection may contain sufficient information for the originating UE (100) to re-attempt session initiation with media parameters that are allowed by the originating user's subscriber profile and by local policy of S-CSCF#1's network. (e.g., according to the procedures specified in IETF RFC 3261) In this flow described in Figure 6 the S-CSCF#1 (504) may allow the initial session initiation attempt to continue.

At 606, S-CSCF#1 (504) may forward the INVITE, through a S-S Session Flow Procedures, to S-CSCF#2 (508). The S-S session flow procedures may be an invite sequence information flow procedure between the S-CSCF#1 (504) and S-CSCF#2 (508).

At 607, S-CSCF#2 (508) may examine the media parameters. If S-CSCF#2 (508) finds media parameters that local policy or the terminating user's subscriber profile does not allow to be used within an IMS session, S-CSCF#2 (508) may reject the session initiation attempt. This rejection may contain sufficient information for the originating UE (100) to re-attempt session initiation with media parameters that are allowed by the terminating user's subscriber profile and by local policy of S-CSCF#2's network. (e.g., according to the procedures specified in IETF RFC 3261) In this flow described in Figure 6 the S-CSCF#2 (508) may allow the initial session initiation attempt to continue.

At 608, S-CSCF#2 (508) may forward the INVITE message to P-CSCF#2 (510).

At 609, P-CSCF#2 (510) may examine the media parameters. If P-CSCF#2 (510) finds media parameters not allowed to be used within an IMS session (based on P-CSCF local policies, or if available bandwidth authorization limitation information coming from the PCRF/PCF), P-CSCF#2 (510) may reject the session initiation attempt. This rejection may contain sufficient information for the originating UE (100) to re-attempt session initiation with media parameters that are allowed by local policy of P-CSCF#2's network. (e.g., according to the procedures specified in IETF RFC 3261) In this flow described in Figure 6 the P-CSCF#2 (510) may allow the initial session initiation attempt to continue.

NOTE 2: Whether the P-CSCF should interact with PCRF/PCF in this step is based on operator policy.

At 610, P-CSCF#2 (510) may forward the INVITE message to UE#2 (500).

At 611, UE#2 (500) may determine the complete set of codecs capable of supporting for this session. UE#2 (500) may determine the intersection with those appearing in the SDP in the INVITE message. For each media flow that is not supported, UE#2 (500) may insert a SDP entry for media ('m= ' line) with 'port=0'. For each media flow that is supported, UE#2 (500) may insert a SDP entry with an assigned port and with the codecs in common with those in the SDP from UE#1 (100).

At 612, UE#2 (500) may return a SDP response (e.g., SDP Answer) listing common media flows and codecs to P-CSCF#2 (510).

At 613, P-CSCF#2 (510) may authorize QoS resources for the remaining media flows and codec choices.

At 614, P-CSCF#2 (510) may forward the SDP response to S-CSCF#2 (508).

At 615, S-CSCF#2 (508) may forward the SDP response to S-CSCF#1 (504).

At 616, S-CSCF#1 (504) may forward the SDP response to P-CSCF#1 (502).

At 617, P-CSCF#1 (502) may authorize the QoS resources for the remaining media flows and codec choices.

At 618, P-CSCF#1 (502) may forward the SDP response to UE#1 (100).

At 619, UE#1 (100) may determine which media flows should be used for this session, and which codecs should be used for each of those media flows. If there was more than one media flow, or if there was more than one choice of codec for a media flow, then UE#1 need to renegotiate the codecs by sending another offer to reduce codec to one with the UE#2 (500) (e.g., select one codec and remain the selected codec in the another offer message to renegotiate).

At 620-624, UE#1 may send the "SDP Offer" message to UE#2 (500), along the signalling path established by the INVITE request.

The remainder of the multi-media session may complete identically to a single media/single codec session, if the negotiation results in a single codec per media.

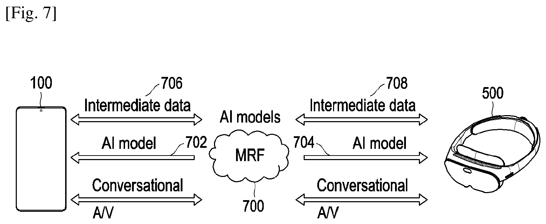

Figure 7 shows an exemplary basic user plane flow for an AI based conversational service between two UEs, with an MRF in between.

Conversational audio and video data may be exchanged between the two UEs (100, 500), via the MRF (700), which can perform any necessary media processing for the media data. When AI is introduced to the conversational service (for example when the conversational video received needs to be processed using an AI model on the UE (100, 500), like processing to create and avatar, or to recreate a 3D point cloud), the MRF (700) may also deliver the necessary AI model(s) data (702, 704) needed by the UEs (100, 500) for the corresponding service.

In this disclosure, AI inference, AI inferencing, or AI model inferencing refers to a scheme or method which uses a trained AI neural network in order to yield results, by feeding into the neural network input data, which consequently returns output results. During an AI training phase, the neural network is trained with multiple data sets in order to develop intelligence, and once trained, the neural network is run, or "inferenced" using an inference engine, by feeding input data into the neural network. The intelligence gathered and stored in the trained neural network during a learning stage is used to understand such new input data. Typical examples of AI inferencing for multimedia applications may include:
- Feeding low resolution video into a trained AI neural network, which is inferenced to output high resolution video (AI upscaling)
- Feeding video into a trained AI neural network, which is inferenced to output labels for facial recognition in the video (AI facial recognition)

Many AI for multimedia applications involve machine vision based scenarios where object recognition is a key part of the output result from AI inferencing.

In a split AI inferencing case, AI inferencing (for media processing) can also be split between the UE and MRF, in which case the intermediate data (706, 708) from the output of the inferencing at the MRF (700) also needs to be delivered to the UE (100, 500), to be used as the input to the inferencing at the UE. The intermediate data (or intermediate AI data) may be data output from the inferencing of a partial/split AI model, in the split AI inferencing case. The intermediate data may be typically a data stream generated based on a split AI model data and corresponding media data input by an inference engine. For this split inference case, the AI model (702, 704) delivered from the MRF (700) to the UE (100, 500) is typically a split partial AI model.

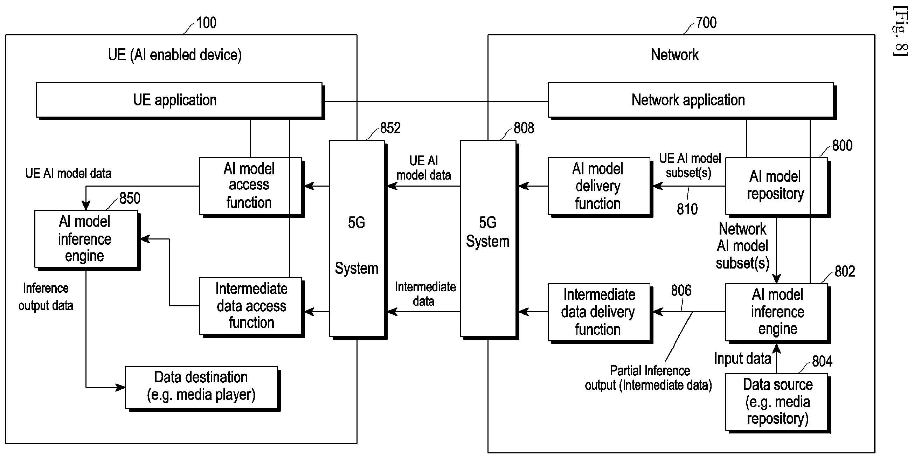

Figure 8 shows an exemplary service architecture for split AI inferencing between a UE and network (e.g. MRF).

In a split AI inferencing, AI model data and intermediate data may be delivered separately. Here, the necessary AI models are delivered from the AI model repository (800) to inference engine (850) in the UE (100) and inference engine (802) in the network (700), respectively.

The data source (804) in the network (700) is fed as the input to the inference engine (802) in the network (700), and the intermediate data output (806) is then sent to the UE (100) via the 5G system (808, 852). Once the UE receives both the partial AI model (810) and also the intermediate data (806), the received intermediate data (806) is fed as the input into the inference engine (850) which uses the received partial AI model (810) for inferencing.

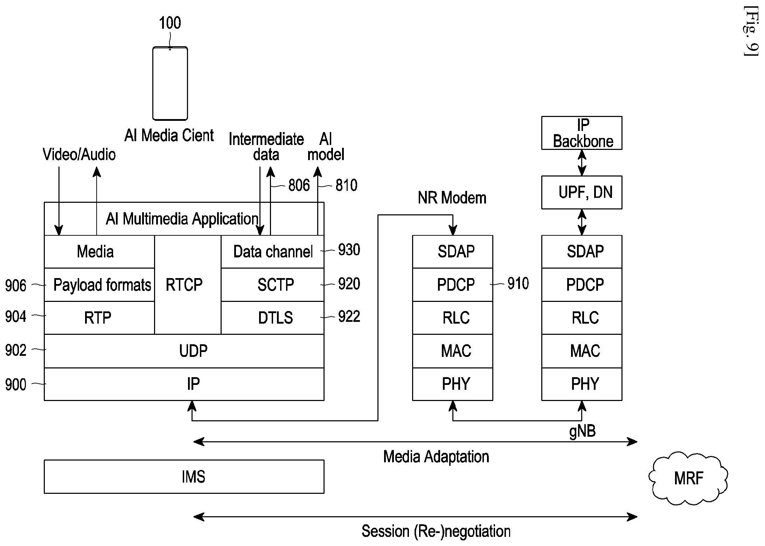

Figure 9 shows an exemplary structure of a 5G AI media client terminal supporting voice and video codecs as well as AI model and intermediate data related media processing functionalities, and an RTP / UDP / IP protocol, as well as data channel respectively.

The IP protocol (900) located at the bottom of this structure is connected to the PDCP (910) located at the top of the protocol structure of NR modem. The RTP (904)/ UDP (902) / IP (900) header is attached to the compressed media frame in the voice and video codec and transmitted to the counterpart terminal through the 5G network. Whilst traditional conversational video and audio are passed through media codecs, encapsulated with corresponding payload formats (906) and delivered via RTP(904)/UDP (902)/IP (900), AI model data (810) and intermediate data (806) (where necessary in the case of split inferencing) are delivered via Web Real-Time Communication (WebRTC) data channels (930) via Stream Control Transmission Protocol (SCTP) (920)/ Datagram Transport Layer Security (DTLS) (922).

Table 1 shows an exemplary SDP offer/answer negotiation for AI model data delivery.

A new SDP attribute '3gpp_AImodel' is defined to identify a data channel stream carrying AI model data.

**[Table 1]**

| |
|---|
| An AI4Media client (in the MRF) that supports AI model inferencing, may offer a AI model data channel with a data channel indicating the '*3gpp_AImodel*' sub-protocol. Receiving AI4Media clients that support AI model inferencing may answer by accepting the AI model data channel. |
| If the offer is accepted, the MRF may generate and send the Al model to the offerer upon establishment of the data channel. |
| If the MRF receives an offer that does not contain a data channel with the '*3gpp_AImodel*' sub-protocol, it may assume that the receiving client does not support AI model inferencing. In such case, conversational media may be delivered and received without any AI inferencing. |

Table 2 shows exemplary procedures as well as the syntax and semantics for the SDP signalling of AI model data delivery.

**[Table 2]**

| |
|---|
| The SDP attribute *3gpp_AImodel* may be used to indicate an AI model data stream sent using a WebRTC data channel. |
| AI4Media clients supporting AI model inferencing may support the *3gpp_AImodel* attribute and may support the following procedures: |
| - when sending an SDP offer, the sending client may include the *3gpp_AImodel* attribute as a subprotocol attribute under the SDP data channel subprotocol attribute (DCSA) for the corresponding WebRTC data channel in the SDP offer |
| - when sending an SDP answer, the receiving client may include the *3gpp_Almodel* attribute as a subprotocol attribute under the SDP DCSA attribute in the SDP answer if the *3gpp_AImodel* attribute was received in an SDP offer |
| - after successful negotiation of the *3gpp_AImodel* attribute in the SDP, the MTSI clients may exchange a WebRTC data channel AI model data. |
| The syntax for the SDP attribute is: |
| a=3gpp_Almodel: <models> <model-info> <dynamic> |
| - <models>: Total number of AI/ML models at the sending client. |
| Depending on the processing configuration of the sending and receiving clients, and the AI processing capability of the receiving client, the sending client may offer multiple AI/ML models to the receiving client for a given service, from which the receiving client can select a suitable AI/ML model to receive |
| - this parameter inside an SDP offer sent by a sending client indicates the total number of AI/ML models available at the sending client. |
| - <model-info>: AI/ML model information static parameters. |
| In order to enable the selection of desired AI/ML models by the receiving client during SDP negotiation, the following static parameters are defined for each AI/ML model. |
| - <model-info> = <model-info-1 > ... <model-info-N> |
| - <model-info-X> = [<id-X> <type> <layers> <targetdelay> <accuracy> <split>] for 1 ≤ X ≤ N here: |
| - <id>: an identifier for the AI/ML model. |
| - <type>: specifies the type of AI/ML (DNN) model, possible types include MLP (multi-layer perceptrons), CNN (convolutional neural network) and RNN (recurrent neural network). |
| - < layers>: specifies the number of layers present in the neural network. |
| - < targetdelay>: specifies the target inference delay for the AI/ML model, for which the model is intended to be used for media processing. |
| - < accuracy>: specifies the accuracy of the AI/ML model. |
| - < split>: a flag specifying whether the AI/ML model is a complete model (when set to 0), or a partial AI/ML model (when set to 1), which requires a separate partial inference at the sending client. If this flag is set to 1, a corresponding intermediate data stream is mandatory, to be received by the receiving client, indicated by the SDP attribute *3gpp_AIdata,* through the offer/answer negotiations and SDP signalling as specified in Table 3 and Table 4. |
| - <dynamic>: Whether the AI/ML model is dynamic or static. |
| Depending on the service type and scenario, AI/ML models may change dynamically during the media service. |
| - this parameter inside an SDP offer sent by a sending client indicates whether the AI/ML model changes dynamically or not during the media service. If an AI/ML model is dynamic, either the structure or parameters (i.e. weights and biases) of the model may change during time of the media service. |

Table 3 shows an exemplary SDP offer/answer negotiation for AI split inference intermediate data delivery.

A new SDP attribute '3gpp_AIdata' is defined to identify a data channel stream carrying intermediate data.

**[Table 3]**

| |
|---|
| An AI4Media client (in the MRF) that supports split AI inferencing, may offer an intermediate data channel with a data channel indicating the '*3gpp_AIdata'* sub-protocol. Receiving AI4Media clients that support split AI inferencing may answer by accepting the intermediate data channel. |
| If the offer is accepted, the MRF may generate (via partial AI inferencing) and send the intermediate data to the offerer upon establishment of the data channel. |
| If the MRF receives an offer that does not contain a data channel with the *'3gpp_AIdata'* sub-protocol, it may assume that the receiving client does not support, or does not require split AI inferencing. In such case, intermediate data is not delivered to the receiving client, and AI inferencing is not split between the two clients. |

Table 4 shows exemplary procedures as well as the syntax and semantics for the SDP signalling of split AI inference intermediate data delivery.

**[Table 4]**

| | | |
|---|---|---|
| The SDP attribute *3gpp_AIdata* may be used to indicate an intermediate AI data stream sent using a WebRTC data channel. | | |
| Clients supporting split AI inferencing may support the *3gpp_AIdata* attribute and may support the following procedures: | | |
| - when sending an SDP offer, the sending client may include the *3gpp_AIdata* attribute as a subprotocol attribute under the SDP DCSA attribute for the corresponding WebRTC data channel in the SDP offer | | |
| - when sending an SDP answer, the receiving client may include the *3gpp_AIdata* attribute as a subprotocol attribute under the SDP DCSA attribute in the SDP answer if the *3gpp_AIdata* attribute was received in an SDP offer | | |
| - after successful negotiation of the *3gpp_AIdata* attribute in the SDP, the MTSI clients may exchange WebRTC data channel intermediate AI data. | | |
| Depending on whether the intermediate AI data is sent to, or from the UE client, the corresponding intermediate AI data m-line may be set to either *sendonly* or *recvonly,* depending on the inclusion of this attribute in either an SDP offer or answer. | | |
| | The syntax for the SDP attribute is: | |
| | | a=3gpp_AIdata: <modelid> <properties> |
| - <modelid>: The corresponding (partial) AI/ML model which should be used for split inferencing on the receiving client. | | |
| Depending on the service, a receiving client may receive multiple intermediate data streams, each as part of one split inference AI media process. Each intermediate data stream should be matched with its corresponding partial AL/ML model in order to correctly complete the inference process on the receiving client. | | |
| - this parameter inside an SDP offer or answer, under an m-line corresponding to intermediate AI data, indicates the identifier of the AI/ML model for which the intermediate AI data stream should be fed into as an input. | | |
| - <properties>: Intermediate data property information. | | |
| In order to assign the relevant QoS to the intermediate AI data stream using the underlying protocol, property information of the intermediate data is signaled using the *properties* attribute. | | |
| - <properties> = [<split-point> <bitrate> <compression> <burst-size> <latency>] where: | | |
| - <split-point>: specifies the split point at which the intermediate data was extracted and delivered between the sender and receiver clients. The split point is specified using the number of the last layer which was inferenced at the sending client. | | |
| - <bitrate>: specifies the average required bitrate for the intermediate data stream in Mbps | | |
| - <compression>: specifies the type compression used to compress the intermediate data stream, if any. | | |
| - <burst-size>: specifies the maximum burst size of the intermediate data stream. | | |
| - <latency>: specifies the latency of the partial inference at the sender client before the data is sent via the data channel. | | |

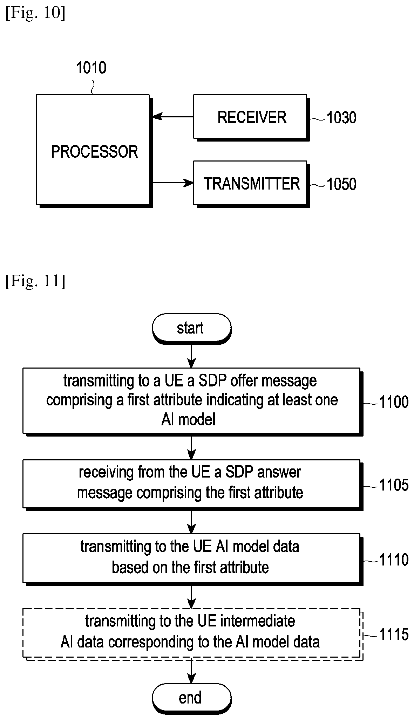

FIG. 10 is a block diagram illustrating a structure of an apparatus according to an embodiment of the disclosure.

Referring to FIG. 10, the apparatus may be a UE, a base station, or a network entity (e.g., P-CSCF, S-CSCF, I-CSCF, or MRF). The apparatus may include a processor (1010) which controls an overall operation of the apparatus to perform an operation according to an embodiment in the disclosure, and a transmitter (1030) and a receiver (1050) for a wireless communication. The transmitter (1030) and the receiver (1050) may be referred to as a transceiver.

Fig. 11 shows a method of a MRF for transmitting AI model data via an IMS according to an embodiment of the disclosure.

The MRF may transmit to a UE a SDP offer message comprising a first attribute indicating at least one AI model (1100).

The first attribute (e.g., *3gpp_AImodel*) may comprise at least a set of parameters corresponding to the at least one AI model. The set of parameters comprises a first parameter indicating whether the at least one AI model is a partial AI model or not. The first parameter may denoted by < split>. The set of parameters may further comprise at least one of parameters including an identifier for the at least one AI model (e.g, <id>), a type of the at least one AI model (e.g, < type >), a number of layers (e.g, < layers >), a target inference delay for the at least one AI model (e.g, < targetdelay >), and an accuracy of the at least one AI model (e.g, < accuracy >).

In case that the first parameter < split> indicates that the at least one AI model is a partial AI model, the SDP answer message may further comprise a second attribute (e.g., *3gpp_AIdata*) indicating intermediate AI data corresponding to the at least one AI model. The second attribute may comprise a set of parameters including an identifier of the at least one AI model (e.g, < modelid >) and property information of the intermediate AI data (e.g, < properties >).

The MRF may receive from the UE a SDP answer message comprising the first attribute (1105).

The MRF may transmit, to the UE, AI model data based on the first attribute (1110).

In case that the SDP answer message further comprises the second attribute, the MRF may transmit, to the UE, the intermediate AI data corresponding to the AI model data (1115).

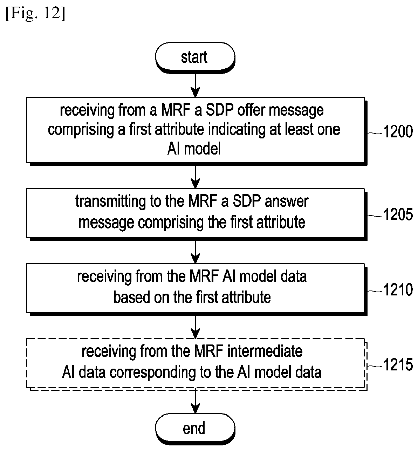

Fig. 12 shows a method of a UE for receiving AI model data via an IMS according to an embodiment of the disclosure.

The UE may receive from a MRF a SDP offer message comprising a first attribute indicating at least one AI model (1200).

The first attribute (e.g., *3gpp_AImodel*) may comprise at least a set of parameters corresponding to the at least one AI model. The set of parameters comprises a first parameter indicating whether the at least one AI model is a partial AI model or not. The first parameter may denoted by < split>. The set of parameters may further comprise at least one of parameters including an identifier for the at least one AI model (e.g, <id>), a type of the at least one AI model (e.g, < type >), a number of layers (e.g, < layers >), a target inference delay for the at least one AI model (e.g, < targetdelay >), and an accuracy of the at least one AI model (e.g, < accuracy >).

In case that the first parameter < split> indicates that the at least one AI model is a partial AI model, the SDP answer message may further comprise a second attribute (e.g., *3gpp_AIdata*) indicating intermediate AI data corresponding to the at least one AI model. The second attribute may comprise a set of parameters including an identifier of the at least one AI model (e.g, < modelid >) and property information of the intermediate AI data (e.g, < properties >).

The UE may transmit to the MRF a SDP answer message comprising the first attribute (1205).

The UE may receive from the MRF AI model data based on the first attribute (1210).

In case that the SDP answer message further comprises the second attribute, the UE may receive from the MRF the intermediate AI data corresponding to the AI model data (1215).

The method according to the embodiment descried in the disclosure may be implemented in hardware, software, or a combination of hardware and software.

At least some of the example embodiment described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the operations of any method or process so disclosed, may be combined in any combination, except combinations where at least some of such features and/or operations are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

While the disclosure has been shown and described with reference to various embodiments thereof, it will be understood by those skilled in the art that various changes in form and details may be made therein without departing from the disclosure as defined by the appended claims and their equivalents.

## Claims

1. A method of a multimedia resource function, MRF, for transmitting artificial intelligence, AI, model data via an internet protocol, IP, multimedia subsystem, IMS, the method comprising:
transmitting, to a user equipment, UE, a session description protocol, SDP, offer message comprising a first attribute indicating at least one AI model;
receiving, from the UE, an SDP answer message comprising the first attribute; and
transmitting, to the UE, AI model data based on the first attribute,
wherein the first attribute comprises at least one set of parameters corresponding to the at least one AI model, and
wherein the at least one set of parameters comprises a first parameter indicating whether the at least one AI model is a partial AI model or not.

2. The method of claim 1,
wherein, in case that the first parameter indicates that the at least one AI model is a partial AI model, the SDP answer message further comprises a second attribute indicating intermediate AI data corresponding to the at least one AI model.

3. The method of claim 2, further comprising:
wherein, in case that the SDP answer message further comprises the second attribute, transmitting, to the UE, the intermediate AI data corresponding to the AI model data.

4. The method of claim 1, wherein the at least one set of parameters further comprises at least one of parameters including an identifier for the at least one AI model, a type of the at least one AI model, a number of layers, a target inference delay for the at least one AI model, and an accuracy of the at least one AI model.

5. The method of claim 2, wherein the second attribute comprises a set of parameters including an identifier of the at least one AI model and property information of the intermediate AI data.

6. A method of user equipment, UE, for receiving artificial intelligence, AI, model data via an internet protocol, IP, multimedia subsystem, IMS, the method comprising:
receiving, from a multimedia resource function, MRF, a session description protocol (SDP) offer message comprising a first attribute indicating at least one AI model;
transmitting, to the MRF, an SDP answer message comprising the first attribute; and
receiving, from the MRF, AI model data based on the first attribute,
wherein the first attribute comprises at least one set of parameters corresponding to the at least one AI model, and
wherein the at least one set of parameters comprises a first parameter indicating whether the at least one AI model is a partial AI model or not.

7. The method of claim 6,
wherein, in case that the first parameter indicates that the at least one AI model is a partial AI model, the SDP answer message further comprises a second attribute indicating intermediate AI data corresponding to the at least one AI model.

8. The method of claim 7, further comprising:
wherein, in case that the SDP answer message further comprises the second attribute, receiving from the MRF the intermediate AI data corresponding to the AI model data.

9. The method of claim 6, wherein the at least one set of parameters further comprises at least one of parameters including an identifier for the at least one AI model, a type of the at least one AI model, a number of layers, a target inference delay for the at least one AI model, and an accuracy of the at least one AI model.

10. The method of claim 7, wherein the second attribute comprises a set of parameters including an identifier of the at least one AI model and property information of the intermediate AI data.

11. A multimedia resource function, MRF, entity for transmitting artificial intelligence, AI, model data via an IP multimedia subsystem, IMS, the MRF entity comprising:
a transceiver; and
a processor coupled to the transceiver, and configured to:
transmit, to a user equipment, UE, a session description protocol, SDP, offer message comprising a first attribute indicating at least one AI model;
receive, from the UE, an SDP answer message comprising the first attribute; and
transmit, to the UE, AI model data based on the first attribute,
wherein the first attribute comprises at least one set of parameters corresponding to the at least one AI model, and
wherein the at least one set of parameters comprises a first parameter indicating whether the at least one AI model is a partial AI model or not.

12. The MRF entity of claim 11,
wherein, in case that the first parameter indicates that the at least one AI model is a partial AI model, the SDP answer message further comprises a second attribute indicating intermediate AI data corresponding to the at least one AI model.

13. The MRF entity of claim 12,
wherein, in case that the SDP answer message further comprises the second attribute, the processor is further configured to:
transmit to the UE the intermediate AI data corresponding to the AI model data.

14. The MRF entity of claim 11, wherein the at least one set of parameters further comprises at least one of parameters including an identifier for the at least one AI model, a type of the at least one AI model, a number of layers, a target inference delay for the at least one AI model, and an accuracy of the at least one AI model.

15. A user equipment, UE, for receiving artificial intelligence, AI, model data via an IP multimedia subsystem, IMS, the UE comprising:
a transceiver; and
a processor coupled to the transceiver, and configured to:
receive, from a multimedia resource function, MRF, entity, a session description protocol, SDP, offer message comprising a first attribute indicating at least one AI model;
transmit, to the MRF entity, an SDP answer message comprising the first attribute; and
receive, from the MRF entity, AI model data based on the first attribute,
wherein the first attribute comprises at least one set of parameters corresponding to the at least one AI model, and
wherein the at least one set of parameters comprises a first parameter indicating whether the at least one AI model is a partial AI model or not.

## Patentansprüche

1. Verfahren einer Multimedia-Ressourcenfunktion, MRF, zum Übermitteln von Modelldaten für künstliche Intelligenz, KI über ein Internetprotokoll-, IP, -Multimedia-Subsystem, IMS, wobei das Verfahren umfasst:
Übermitteln einer Session-Description-Protocol-, SDP, -Angebotsnachricht an ein Teilnehmergerät, UE, die ein erstes Attribut umfasst, das mindestens ein KI-Modell anzeigt;
Empfangen einer SDP-Antwortnachricht von dem UE, die das erste Attribut umfasst; und
Übermitteln von KI-Modelldaten an das UE basierend auf dem ersten Attribut;
wobei das erste Attribut mindestens einen Satz von Parametern umfasst, der dem mindestens einen KI-Modell entspricht, und
wobei der mindestens eine Satz von Parametern einen ersten Parameter umfasst, der anzeigt, ob das mindestens eine AI-Modell ein partielles AI-Modell ist oder nicht.

2. Verfahren nach Anspruch 1,
wobei, falls der erste Parameter anzeigt, dass das mindestens eine AI-Modell ein partielles AI-Modell ist, die SDP-Antwortnachricht ferner ein zweites Attribut umfasst, das dem mindestens einen KI-Modell entsprechende Zwischen-KI-Daten anzeigt.

3. Verfahren nach Anspruch 2, ferner umfassend:
wobei, falls die SDP-Antwortnachricht ferner das zweite Attribut umfasst, die Zwischen-KI-Daten entsprechend den KI-Modelldaten an das UE übermittelt werden.

4. Verfahren nach Anspruch 1, wobei der mindestens eine Satz von Parametern ferner mindestens einen von Parametern umfasst, die einen Identifikator für das mindestens eine KI-Modell, einen Typ des mindestens einen KI-Modells, eine Anzahl von Schichten, eine Ziel-Inferenzverzögerung für das mindestens eine KI-Modell und eine Genauigkeit des mindestens einen KI-Modells umfassen.

5. Verfahren nach Anspruch 2, wobei das zweite Attribut einen Satz von Parametern umfasst, die eine Identifikator des mindestens einen KI-Modells und Eigenschaftsinformationen der Zwischen-KI-Daten umfassen.

6. Verfahren eines Teilnehmergeräts, UE, zum Empfangen von-Modelldaten für künstliche Intelligenz, KI, über ein Internetprotokoll-, IP, -Multimedia-Subsystem, IMS, wobei das Verfahren umfasst:
Empfangen einer Session-Description-Protocol-, SDP, -Angebotsnachricht von einer Multimedia-Ressourcenfunktion, MRF, wobei die SDP-Angebotsnachricht ein erstes Attribut umfasst, das mindestens ein KI-Modell anzeigt;
Übermitteln einer SDP-Antwortnachricht an die MRF, wobei die SDP-Antwortnachricht das erste Attribut umfasst; und
Empfangen von KI-Modelldaten von der MRF basierend auf dem ersten Attribut;
wobei das erste Attribut mindestens einen Satz von Parametern umfasst, der dem mindestens einen KI-Modell entspricht, und
wobei der mindestens eine Satz von Parametern einen ersten Parameter umfasst, der anzeigt, ob das mindestens eine AI-Modell ein partielles AI-Modell ist oder nicht.

7. Verfahren nach Anspruch 6,
wobei, falls der erste Parameter anzeigt, dass das mindestens eine AI-Modell ein partielles AI-Modell ist, die SDP-Antwortnachricht ferner ein zweites Attribut umfasst, das dem mindestens einen KI-Modell entsprechende Zwischen-KI-Daten anzeigt.

8. Verfahren nach Anspruch 7, ferner umfassend:
wobei, falls die SDP-Antwortnachricht ferner das zweite Attribut umfasst, die Zwischen-KI-Daten entsprechend den KI-Modelldaten von der MRF empfangen werden.

9. Verfahren nach Anspruch 6, wobei der mindestens eine Satz von Parametern ferner mindestens einen von Parametern umfasst, die einen Identifikator für das mindestens eine KI-Modell, einen Typ des mindestens einen KI-Modells, eine Anzahl von Schichten, eine Ziel-Inferenzverzögerung für das mindestens eine KI-Modell und eine Genauigkeit des mindestens einen KI-Modells umfassen.

10. Verfahren nach Anspruch 7, wobei das zweite Attribut einen Satz von Parametern umfasst, die einen Identifikator des mindestens einen KI-Modells und Eigenschaftsinformationen der Zwischen-KI-Daten umfassen.

11. Multimedia-Ressourcenfunktions-, MRF, -Entität, zum Übermitteln von Modelldaten für künstliche Intelligenz, KI, über ein IP-Multimedia-Subsystem, IMS, wobei die MRF-Entität umfasst:
einen Sendeempfänger; und
einen Prozessor, der mit dem Sendeempfänger gekoppelt und dazu konfiguriert ist:
eine Session-Description-Protocol-, SDP, -Angebotsnachricht an ein Teilnehmergerät, UE, zu übermitteln, wobei die SDP-Angebotsnachricht ein erstes Attribut umfasst, das mindestens ein KI-Modell anzeigt;
eine SDP-Antwortnachricht von dem UE zu empfangen, wobei die SDP-Antwortnachricht das erste Attribut umfasst; und
KI-Modelldaten an das UE basierend auf dem ersten Attribut zu übermitteln;
wobei das erste Attribut mindestens einen Satz von Parametern umfasst, der dem mindestens einen KI-Modell entspricht, und
wobei der mindestens eine Satz von Parametern einen ersten Parameter umfasst, der anzeigt, ob das mindestens eine AI-Modell ein partielles AI-Modell ist oder nicht.

12. MRF-Entität nach Anspruch 11,
wobei, falls der erste Parameter anzeigt, dass das mindestens eine AI-Modell ein partielles AI-Modell ist, die SDP-Antwortnachricht ferner ein zweites Attribut umfasst, das dem mindestens einen KI-Modell entsprechende Zwischen-KI-Daten anzeigt.

13. MRF-Entität nach Anspruch 12,
wobei, falls die SDP-Antwortnachricht ferner das zweite Attribut umfasst, der Prozessor ferner dazu konfiguriert ist:
die Zwischen-KI-Daten entsprechend den KI-Modelldaten an das UE zu übermitteln.

14. MRF-Entität nach Anspruch 11, wobei der mindestens eine Parametersatz ferner mindestens einen von Parametern umfasst, die einen Identifikator für das mindestens eine KI-Modell, einen Typ des mindestens einen KI-Modells, eine Anzahl von Schichten, eine Ziel-Inferenzverzögerung für das mindestens eine KI-Modell und eine Genauigkeit des mindestens einen KI-Modells umfassen.

15. Teilnehmergerät, UE, zum Empfangen von Modelldaten für künstliche Intelligenz, KI, über ein IP-Multimedia-Subsystem, IMS, wobei das UE umfasst:
einen Sendeempfänger; und
einen Prozessor, der mit dem Sendeempfänger gekoppelt und dazu konfiguriert ist:
eine Session-Description-Protocol-, SDP, -Angebotsnachricht von einer Multimedia-Ressourcenfunktions-, MRF, -Entität, zu empfangen, wobei die SDP-Angebotsnachricht ein erstes Attribut umfasst, das mindestens ein KI-Modell anzeigt;
eine SDP-Antwortnachricht an die MRF-Entität zu übermitteln, wobei die SDP-Antwortnachricht das erste Attribut umfasst; und
KI-Modelldaten von der MRF-Entität basierend auf dem ersten Attribut zu empfangen;
wobei das erste Attribut mindestens einen Satz von Parametern umfasst, der dem mindestens einen KI-Modell entspricht, und
wobei der mindestens eine Satz von Parametern einen ersten Parameter umfasst, der anzeigt, ob das mindestens eine AI-Modell ein partielles AI-Modell ist oder nicht.

## Revendications

1. Procédé d'une fonction de ressource multimédia, FRM, pour transmettre des données de modèle d'intelligence artificielle, IA, via un sous-système multimédia, SMI, de protocole Internet, PI, le procédé comprenant :
transmettre, à un équipement utilisateur, EU, un message d'offre de protocole de description de session, PDS, comprenant un premier attribut indiquant au moins un modèle IA ;
recevoir, depuis l'EU, un message de réponse PDS comprenant le premier attribut ; et
transmettre, à l'EU, des données de modèle IA sur la base du premier attribut,
dans lequel le premier attribut comprend au moins un ensemble de paramètres correspondant au ou aux modèles IA, et
dans lequel le ou les ensembles de paramètres comprennent un premier paramètre indiquant si le ou les modèles IA sont un modèle IA partiel ou non.

2. Procédé selon la revendication 1,
dans lequel, dans le cas où le premier paramètre indique que le ou les modèles IA est un modèle IA partiel, le message de réponse PDS comprend en outre un second attribut indiquant des données IA intermédiaires correspondant au ou aux modèle IA.

3. Procédé selon la revendication 2, comprenant en outre :
dans lequel, dans le cas où le message de réponse PDS comprend en outre le second attribut, transmettre, à l'EU, les données IA intermédiaires correspondant aux données de modèle IA.

4. Procédé selon la revendication 1, dans lequel le ou les ensemble de paramètres comprend en outre au moins l'un des paramètres incluant un identificateur pour le ou les modèles IA, un type du ou des modèles IA, un nombre de couches, un délai d'inférence cible pour le ou les modèles IA, et une précision du ou des modèles IA.

5. Procédé selon la revendication 2, dans lequel le second attribut comprend un ensemble de paramètres incluant un identificateur du ou des modèles IA et des informations de propriété des données IA intermédiaires.

6. Procédé d'un équipement utilisateur, EU, pour recevoir des données de modèle d'intelligence artificielle, IA, via un sous-système multimédia, SMI, de protocole Internet, PI, le procédé comprenant :
recevoir, depuis une fonction de ressource multimédia, FRM, un message d'offre de protocole de description de session, PDS, comprenant un premier attribut indiquant au moins un modèle IA ;
transmettre, à la FRM, un message de réponse PDS comprenant le premier attribut ; et
recevoir, à la FRM, des données de modèle IA sur la base du premier attribut,
dans lequel le premier attribut comprend au moins un ensemble de paramètres correspondant au ou aux modèles IA, et
dans lequel le ou les ensembles de paramètres comprennent un premier paramètre indiquant si le ou les modèles IA sont un modèle IA partiel ou non.

7. Procédé selon la revendication 6,
dans lequel, dans le cas où le premier paramètre indique que le ou les modèles IA est un modèle IA partiel, le message de réponse PDS comprend en outre un second attribut indiquant des données IA intermédiaires correspondant au ou aux modèle IA.

8. Procédé selon la revendication 7, comprenant en outre :
dans lequel, dans le cas où le message de réponse PDS comprend en outre le second attribut, recevoir, depuis la FRM, les données IA intermédiaires correspondant aux données de modèle IA.

9. Procédé selon la revendication 6, dans lequel le ou les ensemble de paramètres comprend en outre au moins l'un des paramètres incluant un identificateur pour le ou les modèles IA, un type du ou des modèles IA, un nombre de couches, un délai d'inférence cible pour le ou les modèles IA, et une précision du ou des modèles IA.

10. Procédé selon la revendication 7, dans lequel le second attribut comprend un ensemble de paramètres incluant un identificateur du ou des modèles IA et des informations de propriété des données IA intermédiaires.

11. Entité de fonction de ressource multimédia, FRM, pour transmettre des données de modèle d'intelligence artificielle, IA, via un sous-système multimédia, SMI, PI, l'entité FRM comprenant :
un émetteur-récepteur ; et
un processeur couplé à l'émetteur-récepteur et configuré pour :
transmettre, à un équipement utilisateur, EU, un message d'offre de protocole de description de session, PDS, comprenant un premier attribut indiquant au moins un modèle IA ;
recevoir, depuis l'EU, un message de réponse PDS comprenant le premier attribut ; et
transmettre, à l'EU, des données de modèle IA sur la base du premier attribut,
dans lequel le premier attribut comprend au moins un ensemble de paramètres correspondant au ou aux modèles IA, et
dans lequel le ou les ensembles de paramètres comprennent un premier paramètre indiquant si le ou les modèles IA sont un modèle IA partiel ou non.

12. Entité FRM selon la revendication 11,
dans lequel, dans le cas où le premier paramètre indique que le ou les modèles IA est un modèle IA partiel, le message de réponse PDS comprend en outre un second attribut indiquant des données IA intermédiaires correspondant au ou aux modèle IA.

13. Entité FRM selon la revendication 12,
dans lequel, dans le cas où le message de réponse PDS comprend en outre le second attribut, le processeur est en outre configuré pour :
transmettre, à l'EU, les données IA intermédiaires correspondant aux données de modèle IA.

14. Entité FRM selon la revendication 11, dans lequel le ou les ensemble de paramètres comprend en outre au moins l'un des paramètres incluant un identificateur pour le ou les modèles IA, un type du ou des modèles IA, un nombre de couches, un délai d'inférence cible pour le ou les modèles IA, et une précision du ou des modèles IA.

15. Équipement utilisateur, EU, pour recevoir des données de modèle d'intelligence artificielle, IA, via un sous-système multimédia, SMI, PI, l'EU comprenant :
un émetteur-récepteur ; et
un processeur couplé à l'émetteur-récepteur et configuré pour :
recevoir, depuis une entité de fonction de ressource multimédia, FRM, un message d'offre de protocole de description de session, PDS, comprenant un premier attribut indiquant au moins un modèle IA ;
transmettre, à l'entité FRM, un message de réponse PDS comprenant le premier attribut ; et
recevoir, depuis l'entité FRM, des données de modèle IA sur la base du premier attribut,
dans lequel le premier attribut comprend au moins un ensemble de paramètres correspondant au ou aux modèles IA, et
dans lequel le ou les ensembles de paramètres comprennent un premier paramètre indiquant si le ou les modèles IA sont un modèle IA partiel ou non.
